Europäisches Patentamt

European Patent Office

Office européen des brevets

(11) Veröffentlichungsnummer: **0 178 554**
**B1**

(12) **EUROPÄISCHE PATENTSCHRIFT**

(45) Veröffentlichungstag der Patentschrift:
12.08.87

(21) Anmeldenummer: 85112567.4

(22) Anmeldetag: 04.10.85

(51) Int. Cl.⁴: **C 08 K 3/32**, C 08 K 9/10,
C 08 L 75/04, C 08 J 9/00,
C 09 K 21/04

(54) Hydrolysestabiles Flammschutzmittel auf der Basis von Ammoniumpolyphosphat.

(30) Priorität: 18.10.84 DE 3438097
27.07.85 DE 3526965

(43) Veröffentlichungstag der Anmeldung:
23.04.86 Patentblatt 86/17

(45) Bekanntmachung des Hinweises auf die Patenterteilung:
12.08.87 Patentblatt 87/33

(84) Benannte Vertragsstaaten:
DE FR GB IT NL SE

(56) Entgegenhaltungen:
DE-A-2 949 537
DE-A-3 217 816

(73) Patentinhaber: HOECHST AKTIENGESELLSCHAFT,
Postfach 80 03 20, D-6230 Frankfurt am Main 80
(DE)

(72) Erfinder: Staendeke, Horst, Dr., Alte Honrather
Strasse 22, D-5204 Lohmar (DE)
Erfinder: Michels, Eduard, Dr., Neue Bohle 66,
D-5040 Brühl (DE)

EP 0 178 554 B1

**Beschreibung**

Gegenstand der Erfindung ist ein hydrolysestabiles, mikroverkapseltes Flammschutzmittel auf der Basis von freifließendem, pulverförmigem Ammoniumpolyphosphat und ein Verfahren zu seiner Herstellung.

Es ist generell bekannt, Ammoniumpolyphosphate als Flammschutzmittel für Kunststoffe zu verwenden. Beispielsweise beschreibt die Deutsche Auslegeschrift 12 83 532 ein Verfahren zur Herstellung von flammwidrigen Polyurethanen aus hochmolekularen Polyhydroxylverbindungen, Polyisocyanaten und Katalysatoren, wobei ein Ammoniumpolyphosphat der allgemeinen Formel

$$H_{(n-m)+2}(NH_4)_m P_n O_{3n+1}$$

in der n eine ganze Zahl mit einem über 10 liegenden Durchschnittswert ist, m eine ganze Zahl bis maximal n+2 bedeutet und m/n zwischen etwa 0,7 und 1,1 liegt, als Flammschutzmittelzusatz vorgeschlagen wird.

Obgleich Ammoniumpolyphosphate der vorgenannten allgemeinen Formel beim Einsatz in Polyurethanen letzteren einen guten Flammschutz verleihen, sind sie mit dem Nachteil behaftet, daß sie nicht ausreichend wasserunlöslich sind und deshalb im Laufe der Zeit durch Witterungseinflüsse aus dem Kunststoff ausgewaschen werden. Wie aus Spalte 3 der DE-AS 12 83 532 ersichtlich, besitzen die dort als praktisch wasserunlöslich bezeichneten Ammoniumpolyphosphate dennoch eine beachtliche Löslichkeit in Wasser, indem beim Aufschlämmen von 10 g des Ammoniumpolyphosphats in 100 ml Wasser bei 25°C bis zu 5 g des Ammoniumpolyphosphates gelöst werden, d.h. daß die löslichen Anteile des Ammoniumpolyphosphates bis zu 50 % der eingesetzten Menge betragen.

In den deutschen Offenlegungsschriften DE-OS 29 49 537 und DE-OS 30 05 252 werden Verfahren zur Herstellung von hydrolysestabilen, pulverförmigen Ammoniumpolyphosphaten durch Umhüllung mit Melamin/Formaldehyd-Harzen bzw. Phenol/Formaldehyd-Harzen beschrieben. In beiden Fällen wird durch diese Maßnahme die Wasserlöslichkeit im Vergleich zu unbeschichtetem Ammoniumpolyphosphat deutlich verringert.

Nachteilig bei der Verwendung als Flammschutzmittel ist jedoch, daß das Beschichtungsmaterial geringe Mengen an Formaldehyd freisetzt.

Schließlich wird in der DE-OS 32 17 816 die Herstellung von hydrolysestabilen, pulverförmigen Ammoniumpolyphosphaten durch Umhüllung mit gehärteten Epoxidharzen beschrieben. Allerdings ist der angestrebte Effekt der Verringerung der wasserlöslichen Anteile weniger ausgeprägt als bei den Melamin/Formaldehyd-Harzen.

Es bestand somit die Aufgabe, Mittel und Wege zur Verminderung der Löslichkeit von Ammoniumpolyphosphaten in Wasser zu finden, ao daß die Gefahr des Auswaschens des Ammoniumpolyphosphates beim Einsatz als Flammschutzmittel in Kunststoffen sowie in Holz- oder Papierwerkstoffen durch Witterungseinflüsse möglichst weitgehend vermieden wird. Ferner soll sichergestellt sein, daß das Beschichtungsmaterial keine Schadstoffe freisetzt.

Es hat sich nunmehr gezeigt und war nicht vorhersehbar, daß der erfindungsgemäße Ersatz von Melamin- bzw. Phenolharzen durch Polyurethane mit Vorteilen verbunden ist.

Somit betrifft die Erfindung ein Flammschutzmittel auf der Basis von freifließendem, pulverförmigem Ammoniumpolyphosphat der allgemeinen Formel

$$H_{(n-m)+2}(NH_4)_m P_n O_{3n+1}$$

in welcher n eine ganze Zahl mit einem Durchschnittswert von etwa 20 bis 800 bedeutet und das Verhältnis von m zu n etwa 1 beträgt, welches dadurch gekennzeichnet ist, daß es aus

a) etwa 75 bis 99,5 Masse% Ammoniumpolyphosphat und
b) etwa 0,5 bis 25 Masse% eines Reaktionsproduktes aus einem Polyisocyanat und einer Polyhydroxiverbindung, wobei das Polyurethan die einzelnen Ammoniumpolyphosphatteilchen umhüllt,

besteht. Das Ergebnis dieser Erfindung ist ein hydrolysestabiles, mikroverkapseltes Flammschutzmittel.

Das Mittel der Erfindung besitzt im allgemeinen eine mittlere Teilchengröße von etwa 0,01 bis 0,1 mm und der Kondensationsgrad n des Ammoniumpolyphosphates ist vorzugsweise eine ganze Zahl mit einem Durchschnittswert von 450 bis 800, bestimmt nach dem Endgruppen-Titrations-Verfahren von "van Wazer, Griffiter und McCullough", Anal. Chem. 26, Seite 1755 (1954).

Entsprechend einer weiteren bevorzugten Ausführungsform des erfindungsgemäßen Mittels beträgt der Anteil des Polyurethans 2 bis etwa 15 Masse%.

Das Polyurethan ist ein Reaktionsprodukt, welches durch eine Polyaddition aus Polyisocyanat und einer Polyhydroxiverbindung entsteht. Der Begriff "Polyisocyanat" umfaßt alle handelsüblichen aromatischen und aliphatischen Di- und Polyisocanate, wie sie z.B. für die Herstellung von Polyurethan-, Polyisocyanurat- oder Polycarbodiimidschäumen Verwendung finden.

Der Begriff "Polyhydroxiverbindung" umfaßt alle handelsüblichen Polyether- und Polyesterpolyole, wie sie z. B. für die Herstellung von Polyurethanschäumen oder Polyurethanelastomeren Verwendung finden, sowie aliphatische, aromatische und heterocyclische Di- und Polyhydroxiverbindungen.

Das erfindungsgemäße Verfahren zur Herstellung dieses hydrolysestabilen, mikroverkapselten Flammschutzmittels ist dadurch gekennzeichnet, daß man eine Suspension, welche aus einem Verdünnungsmittel und aus freifließendem, pulverförmigem Ammoniumpolyphosphat der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 beträgt, sowie aus einem Polyisocyanat und aus einer Polyhydroxiverbindung besteht, während 0,5 bis 5 Stunden unter Rühren auf Temperaturen zwischen 30 bis 200°C hält und anschließend abkühlt, filtriert und das nunmehr mit einem Polyurethan mikroverkapselte Ammoniumpolyphosphat trocknet.

Im einzelnen besteht das Verfahren wahlweise darin, daß

a) man die Suspension aus Verdünnungsmittel und Ammoniumpolyphosphat vorlegt und dieser Suspension Lösungen des Polyisocyanates und anschließend der Polyhydroxiverbindung in dem Verdünnungsmittel langsam zugibt;

b) in der allgemeinen Formel des Ammoniumpolyphosphates n eine ganze Zahl mit einem Durchschnittswert von 450 bis 800 ist;

c) als Verdünnungsmittel Lösemittel auf Basis aromatischer, aliphatischer oder cycloaliphatischer Kohlenwasserstoffe sowie aliphatischer, aromatischer und gemischtaliphatischer/aromatischer Ketone und Keton-Wasser-Gemische, vorzugsweise Aceton, eingesetzt werden;

d) als Polyisocyanat handelsübliche aromatischa oder aliphatische Di- und Polyisocyanate, vorzugsweise technisches 4,4′ -Diphenylmethandiisocyanat (MDI), eingesetzt werden;

e) als Polyhydroxiverbindungen handelsübliche Polyether- und Polyesterpolyole, sowie aliphatische, aromatische und heterocyclische Polyhydroxiverbindungen, vorzugsweise Melamin/Formaldehyd-Harze, eingesetzt werden;

f) in der Suspension ein Verhältnis von Ammoniumpolyphosphat: Verdünnungsmittel: Polyisocyanat/Polyhydroxiverbindung wie 1 : 1,5 - 2,5 : 0,05 - 0,25, vorzugsweise wie 1 : 2 : 0,1, eingehalten wird;

g) die Reaktionszeit 1 bis 2 Stunden bei Temperaturen zwischen 50 bis 100°C beträgt;

h) die Trocknung bei Temperaturen zwischen 80 bis 150°C in Inertgasatmosphäre, vorzugsweise im Stickstoffstrom, erfolgt;

i) die erreichte mittlere Teilchengröße des mikroverkapselten Ammoniumpolyphosphates als Flammschutzmittel zwischen 0,01 und 0,1 mm, vorzugsweise zwischen 0,03 und 0,06 mm, beträgt; und

k) der Anteil des Polyurethans im Flammschutzmittel 2 bis etwa 15 Masse% beträgt.

Schließlich betrifft die Erfindung auch die Verwendung des vorbeschriebenen Mittels zur flammwidrigen Einstellung von Polyurethanen bzw. Polyurethanschäumen, wobei der Gehalt des Mittels im Polyurethanschaum etwa 5 bis 25 Masse%, bezogen auf die Mange der Polyolkomponente des Polyurethans, beträgt.

Das Aufbringen der Polyurethane auf die Ammoniumpolyphosphat-Teilchen kann in Lösungsmitteln auf Basis aromatischer, aliphatischer oder cycloaliphatischer Kohlenwasserstoffe oder in aliphatischen, aromatischen oder aliphatischen/aromatischen Ketonen sowie in Keton-Wasser-Gemischen unter Rühren der Ammoniumpolyphosphat/Polyisocyanat/Polyhydroxiverbindung-Suspension erfolgen, wobei die Polyadditionsreaktion unter Erwärmen durchgeführt wird.

Durch die erfindungsgemäße Umhüllung der Ammoniumpolyphosphat, Teilchen mit einem Polyurethan wird die Löslichkeit des Ammoniumpolyphosphates in Wasser erheblich herabgesetzt, was sich günstig auswirkt, z. B. beim Einsatz eines derartig vorbehandelten Ammoniumpolyphosphates als Flammschutzmittel in Polyurethanschäumen.

Die Polyurethane zeichnen sich als Beschichtungsmaterial für Ammoniumpolyphosphat gegenüber den bekannten Umhüllungsharzen Phenol/Formaldehyd-Harz und Epoxidharz durch eine höhere Verringerung der Wasserlöslichkeit und gegenüber den Melamin/Formaldehyd-Harzen und den Phenol/Formaldehyd-Harzen dadurch aus, daß sie keinen Formaldehyd freisetzen können.

Ferner weist die Polyurethanbeschichtung gegenüber der Melamin/Formaldehyd-Harzbeschichtung den Vorteil der höheren Thermostabilität auf, was sich besonders positiv bei der Einarbeitung in Thermoplaste mit hohen Verarbeitungstemperaturen auswirkt.

Die erfindungsgemäßen Mittel, deren Herstellung und Vorteile werden in den nachfolgenden Beispielen erläutert. Zur Durchführung der in den Beispielen dargelegten Versuche wurden im Handel erhältliche Ammoniumpolyphosphate sowie verschiedene, ebenfalls handelsübliche Polyisocyanate und Polyhydroxiverbindungen eingesetzt. Im einzelnen handelt es sich hierbei um folgende Produkte:

1. ®Exolit 422, Hoechst Aktiengesellschaft, Frankfurt/Main.

Es handelt sich um ein feinkörniges, in Wasser schwer lösliches Ammoniumpolyphosphat, wobei der Kondensationsgrad n ~ 700 ist.

2. ®Caradate 30, Deutsche Shell Chemie GmbH, Frankfurt/Main. Es handelt sich um ein Gemisch verschiedener aromatischer Di-und Triisocyanate mit 4,4′-Diphenylmethandiisocyanat als Hauptkomponente. Das Produkt ist eine Flüssigkeit von tiefbrauner bis schwarzer Farbe. Der Isocyanatgehalt liegt bei 30,2 % NCO. Die Dichte (bei 23°C) beträgt 1,22-1,24 g/ml, die Viskosität (bei 25°C) 160-240 mPa.s.

3. ®Desmodur T 80, Bayer Aktiengesellschaft, Leverkusen.

Es handelt sich um ein Isomerengemisch eines aromatischen Diisocyanates mit 80 Gewichtsprozent 2,4-Toluoldiisocyanat und 20 Gewichtsprozent 2,6-Toluoldiisocyanat. Das Produkt ist eine farblose Flüssigkeit, der Isocyanatgehalt liegt bei ca. 48 %. Die Dichte (bei 25°C) beträgt ca. 1,2g/ml.

3

**0 178 554**

4. Isophorondiisocyanat (3-Isocyanatomethyl-3,5,5-trimethyl-cyclohexylisocyanat), Chemische Werke Hüls Aktiengesellschaft, Marl.

Es handelt sich um ein flüssiges, farbloses Produkt mit einem Isocyanatgehalt von 37,5 - 37,8 % NCO. Die Dichte (bei 20°C) beträgt 1,058 - 1,064 g/ml, die Viskosität (bei 20°C) 15 mPa.s.

5 ® Caradol 585-8, Deutsche Shell Chemie GmbH, Frankfurt/Main.

Es handelt sich um ein Polyetherpolyol mit einer OH-Zahl von 580 mg KOH/g, einer Dichte (bei 20°C) von 1,10 g/ml und einer Viskosität (bei 20°C) von 7500 mPa.s.

6. ® Ugipol 1004, Arco Chemical Europe, Inc., Düsseldorf.

Es handelt sich um ein Polyetherpolyol mit einer OH-Zahl von 235-295 mg KOH/g, einer Dichte (bei 25°C) von 1,01 g/ml und einer Viskosität (bei 25°C) von 50 mPa.s.

7. ® Ugipol 1020 Arco Chemical Europe, Inc., Düsseldorf.

Es handelt sich um ein Polyetherpolyol mit einer OH-Zahl von 54 - 60 mg KOH/g, einer Dichte (bei 25°C) von 1,00 g/ml und einer Viskosität (bei 25°C) von 300 mPa.s.

8. Polyol 600 PU, Hoechst Aktiengesellschaft, Frankfurt/Main.

Es handelt sich um ein Polyethylenglykol mit einer OH-Zahl von 178 - 197 mg KOH/g, einer Viskosität (bei 25°C) von 150 mPa.s und einer Dichte (bei 25°C) von 1,12 g/ml.

9 ®Alnovol PN 320, Hoechst Aktiengesellschaft, Frankfurt/ Main.

Es handelt sich um helles, nicht härtbares Phenolharz vom Novolaktyp mit einer OH-Zahl von ca. 530 mg KOH/g, einem Schmelzpunkt von 83 - 88°C und einer Dichte (bei 20°C) von 1,25g/ml.

10. ®Phenodur PR 373, Hoechst Aktiengesellschaft, Frankfurt/Main.

Es handelt sich um ein helles, härtbares Phenolharz. Das Produkt hat eine OH-Zahl von ca. 600-610 mg KOH/g und eine Dichte (20°C) von 1,26 g/ml.

11. ®Kauramin-Tränkharz 700 Pulver, BASF Aktiengesellschaft, Ludwigshafen.

Es handelt sich um ein weißes pulverförmiges Melamin-Formaldehyd-Kondensationsharz. Das Produkt hat in einer 50 %igen wäßrigen Lösung eine Viskosität (bei 20°C) von 20 - 50 mPa.s, eine Dichte (bei 20°C) von 1,22 g/ml und einen pH-Wert von 8,8-9.

12. ® Madurit MW 909, Hoechst Aktiengesellschaft, Frankfurt/Main.

Es handelt sich um ein weißes pulverförmiges Melamin-Formaldehyd-Kondensationsharz. Das Produkt hat in einer 50 %igen wäßrigen Lösung eine Viskosität (bei 20°C) von ca. 30 mPa.s, eine Dichte (bei 20°C) von 1,21 - 1,22 g/ml und einen pH-Wert von 9,0-10,0.


**Beispiel 1**

In einer Rührapparatur aus Glas wurden in 1000 ml Xylol 250 g ®Exolit 422 suspendiert; dann wurden 9,8 g ®Caradol 585-8 und 15,2 g ®Caradate 30 eingetropft. Anschließend wurde die Suspension zum schwachen Sieden erhitzt und 2 Stunden gerührt. Nach Abkühlung auf Raumtemperatur wurde filtriert; der Filterkuchen wurde bei 110°C im Stickstoffstrom getrocknet. Es wurden 264 g beschichtetes Ammoniumpolyphosphat mit einem Polyurethananteil von 7,9 Masse% erhalten.

Zur Bestimmung der wasserlöslichen Anteile wurden 10 g des hergestellten Produktes in 100 ml Wasser suspendiert und die Suspension 20 min bei 25°C gerührt. Anschließend wurde der im Wasser ungelöste Anteil des Produktes innerhalb von 40 Minuten durch Zentrifugieren sedimentiert. Von der überstehenden klaren Lösung wurden 5,0 ml in eine zuvor gewogene Aluminiumschale pipettiert und bei 120°C im Trockenschrank eingedampft. Aus der Menge des Verdampfungsrückstandes wurde der wasserlösliche Anteil berechnet. Das Ergebnis ist in Tabelle 1 dargestellt.


**Beispiel 2**

Es wurde analog Beispiel 1 verfahren, wobei jedoch 14,7 g ®Ugipol 1004 und 10,3 g ®Caradate 30 eingesetzt wurden. Es wurden 266 g beschichtetes Ammoniumpolyphosphat mit einem Polyurethananteil von 8,7 Masse% erhalten. Die ermittelten Werte für die wasserlöslichen Anteile sind in Tabelle 1 aufgeführt.


**Beispiel 3**

Es wurde analog Beispiel 1 verfahren, wobei jedoch 26,3 g ®Ugipol 1020 und 3,7 g ®Caradate 30 eingesetzt wurden. Es wurden 271 g beschichtetes Ammoniumpolyphosphat mit einem Polyurethananteil von 10,1 Masse% erhalten.

Die ermittelten Werte für die wasserlöslichen Anteile sind in Tabelle 1 aufgeführt.

4

**Beispiel 4**

Es wurde analog Beispiel 1 verfahren, wobei jedoch 16,6 g Polyol 600 PU und 8,4 g ®Caradate 30 eingesetzt wurden. Es wurden 269 g beschichtetes Ammoniumpolyphosphat mit einem Polyurethananteil von 8,3 Masse% erhalten.

Die ermittelten Werte für die wasserlöslichen Anteile sind in Tabelle 1 aufgeführt.

**Beispiel 5**

In einer Rührapparatur aus Glas wurden 250 g ®Exolit 422 in 400 ml Aceton suspendiert; dann wurden eine Lösung von 4,75 g ®Caradate 30 in 100 ml Aceton und eine Lösung von 1,5 g ®Kauramin-Tränkharz 700 Pulver in 40 ml Aceton/20 ml Wasser zugegeben. Anschließend wurde die Suspension zum schwachen Sieden erhitzt. Nach einer Nachrührzeit von 1 Stunde wurde auf Raumtemperatur abgekühlt und filtriert. Der erhaltene Filterkuchen wurde bei 100°C im Stickstoffstrom getrocknet. Es wurden 246 g beschichtetes Ammoniumpolyphosphat mit einem Polyurethananteil von 1,9 Masse% erhalten.

Die ermittelten Werte für die wasserlöslichen Anteile sind in Tabelle 2 aufgeführt.

**Beispiel 6**

Es wurde analog Beispiel 5 verfahren, wobei jedoch eine Lösung von 9,5 g ®Caradate 30 in 100 ml Aceton und eine Lösung von 3 g ®Kauramin-Tränkharz 700 Pulver in 40 ml Aceton/20 ml Wasser eingesetzt wurden. Es wurden 251 g beschichtetes Ammoniumpolyphosphat mit einem Polyurethananteil von 4,2 Masse% erhalten.

Die ermittelten Werte für die wasserlöslichen Anteile sind in Tabelle 2 aufgeführt.

**Beispiel 7**

Es wurde analog Beispiel 5 verfahren, wobei jedoch eine Lösung von 14,25 g ®Caradate 30 in 100 ml Aceton und eine Lösung von 4,5 g ®Kauramin-Tränkharz 700 Pulver in 40 ml Aceton/20 ml Wasser eingesetzt wurden. Es wurden 263 g beschichtetes Ammoniumpolyphosphat mit einem Polyurethananteil von 6,6 Masse% erhalten.

Die ermittelten Werte für die wasserlöslichen Anteile sind in Tabelle 2 aufgeführt.

**Bespiel 8**

Es wurde analog Beispiel 5 verfahren, wobei jedoch eine Lösung von 19 g ®Caradate 30 in 100 ml Aceton und eine Lösung von 6,0 g ®Kauramin-Tränkharz 700 Pulver in 40 ml Aceton/20 ml Wasser eingesetzt wurden. Es wurden 271 g beschichtetes Ammoniumpolyphosphat mit einem Polyurethananteil von 8,7 Masse% erhalten.

Die ermittelten Werte für die wasserlöslichen Anteile sind in Tabelle 2 aufgeführt.

**Beispiel 9**

Es wurde analog Beispiel 5 verfahren, wobei jedoch eine Lösung von 28,5 g ®Caradate 30 in 100 ml Aceton und eine Lösung von 9,0 g ®Kauramin-Tränkharz 700 Pulver in 40 ml Aceton/20 ml Wasser eingesetzt wurden. Es wurden 274 g beschichtetes Ammoniumpolyphosphat mit einem Polyurethananteil von 13,4 Masse% erhalten.

Die ermittelten Werte für die wasserlöslichen Anteile sind in Taballe 2 aufgeführt.

**Beispiel 10**

Es wurde analog Beispiel 8 verfahren, wobei jedoch eine Lösung von 6 g ®Madurit MW 909 in 40 ml Aceton/20 ml Wasser eingesetzt wurde. Es wurden 273 g beschichtetes Ammoniumpolyphosphat mit einem Polyurethananteil von 8,3 Masse% erhalten. Die ermittelten Werte für die wasserlöslichen Anteile sind in Tabelle 3 aufgeführt.

**Beispiel 11**

Es wurde analog Beispiel 5 verfahren, wobei jedoch eine Lösung von 20 g ®Caradate 30 in 100 ml Aceton und eine Lösung von 5 g ®Alnovol PN 320 in 50 ml Aceton eingesetzt wurden. Es wurden 263 g beschichtetes Ammoniumpolyphosphat mit einem Polyurethananteil von 7,9 Masse% erhalten.

Die ermittelten Werte für die wasserlöslichen Anteile sind in Tabelle 3 aufgeführt.

**Beispiel 12**

Es wurde analog Beispiel 5 verfahren, wobei jedoch eine Lösung von 17,5 g ®Caradate 30 in 100 ml Aceton und eine Lösung von 7,5 g ®Phenodur PR 373 in 50 ml Aceton eingesetzt wurden. Es wurden 261 g beschichtetes Ammoniumpolyphosphat mit einem Polyurethananteil von 7,6 Masse% erhalten.

Die ermittelten Werte für die wasserlöslichen Anteile sind in Tabelle 3 ausgeführt.

**Beispiel 13**

Es wurde analog Beispiel 5 verfahren, wobei jedoch eine Lösung von 17,5 g ®Desmodur T 80 in 100 ml Aceton und eine Lösung von 7,5 g ®Kauramin-Tränkharz 700 Pulver in 40 ml Aceton/20 ml Wasser eingesetzt wurden. Es wurden 275 g beschichtetes Ammoniumpolyphosphat mit einem Polyurethananteil von 8,1 Masse% erhalten.

Die ermittelten Werte für die wasserlöslichen Anteile sind in Tabelle 3 aufgeführt.

**Beispiel 14**

Es wurde analog Beispiel 5 verfahren, wobei jedoch eine Lösung von 20 g Isophorondiisocyanat in 100 ml Aceton und eine Lösung von 5 g ®Kauramin-Tränkharz 700 Pulver in 40 ml Aceton/20 ml Wasser eingesetzt wurden. Es wurden 266 g beschichtetes Ammoniumpolyphosphat mit einem Polyurethananteil von 7,3 Masse% erhalten.

Die ermittelten Werte für die wasserlöslichen Anteile sind in Tabelle 3 aufgeführt.

**Beispiel 15**

In einem beheizbaren emaillierten Rührreaktor (Inhalt: 300 l) wurden 60 kg ®Exolit 422 in 100 l Aceton suspendiert; dann wurden eine Lösung von 4,5 kg ®Caradate 30 in 15 l Acaton und eine Lösung von 1,4 kg ®Kauramin-Tränkharz 700 Pulver in 10 l Aceton/5 l Wasser zugegeben. Anschließend wurde die Suspension zum Sieden erhitzt und 2 Stunden bei dieser Temperatur gehalten. Dann wurde auf Raumtemperatur abgekühlt und filtriert; der erhaltene Filterkuchen wurde bei 100°C im Stickstoffstrom getrocknet. Es wurden 65,1 kg beschichtetes Ammoniumpolyphosphat mit einem Polyurethananteil von 8,7 Masse% arhaltan. Die wasserlöslichen Anteile betrugen 0,2 % bei 25°C und 0,7 % bei 60°C. Im Vergleich zum unbeschichteten ®Exolit 422 bedeutet dies eine Verringerung der wasserlöslichen Anteile um 98 % bzw. 99 %.

In Tabelle 4 sind die Werte der thermogravimetrischen Analyse angegeben.

6

**TABELLE 1**

| Produkt | Gehalt an Poly-urethan (%) | Wasserlösliche Anteile (%) | | | |
|---|---|---|---|---|---|
| | | bei 25°C | Veränderung (%) | bei 60°C | Veränderung (%) |
| Beispiel 1 | 7,9 | 3,7 | -55 | 10,4 | -83 |
| Beispiel 2 | 8,7 | 2,1 | -74 | 5,2 | -92 |
| Beispiel 3 | 10,1 | 2,9 | -65 | 7,9 | -87 |
| Beispiel 4 | 8,3 | 3,1 | -62 | 8,7 | -86 |
| ® Exolit 422[1] | - | 8,2 | - | 62 | - |

[1] Zum Vergleich wurden die Werte für die unbeschichtete Handelsware ( ® Exolit 422, Hoechst Aktiengesellschaft, Frankfurt/Main) aufgeführt.

**TABELLE 2**

| Produkt | Gehalt an Poly-urethan (%) | Wasserlösliche Anteile (%) | | | |
|---|---|---|---|---|---|
| | | bei 25°C | Veränderung (%) | bei 60°C | Veränderung (%) |
| Beispiel 5 | 1,9 | 1,0 | -88 | 5,4 | -91 |
| Beispiel 6 | 4,2 | 0,9 | -89 | 2,8 | -95 |
| Beispiel 7 | 6,6 | 0,4 | -95 | 1,0 | -98 |
| Beispiel 8 | 8,7 | 0,3 | -96 | 0,7 | -99 |
| Beispiel 9 | 13,4 | 0,2 | -98 | 0,6 | -99 |
| ® Exolit 422 [1] | - | 8,2 | - | 62 | - |

[1] Zum Vergleich wurden die Werte für die unbeschichtete Handelsware ( ®Exolit 422, Hoechst Aktiengesellschaft, Frankfurt/Main) aufgeführt.

**TABELLE 3**

| Produkt | Gehalt an Poly-urethan (%) | Wasserlösliche Anteile (%) | | | |
|---|---|---|---|---|---|
| | | bei 25°C | Veränderung (%) | bei 60°C | Veränderung (%) |
| Beispiel 10 | 8,3 | 0,4 | -95 | 1,3 | -98 |
| Beispiel 11 | 7,9 | 1,0 | -88 | 2,1 | -97 |
| Beispiel 12 | 7,6 | 0,4 | -95 | 2,7 | -96 |
| Beispiel 13 | 8,1 | 0,8 | -90 | 1,8 | -97 |
| Beispiel 14 | 7,3 | 0,4 | -95 | 3,0 | -95 |
| ® Exolit 422 [1] | - | 8,2 | - | 62 | - |

[1] Zum Vergleich wurden die Werte für die unbeschichtete Handelsware (® Exolit 422, Hoechst Aktiengesellschaft, Frankfurt/Main) aufgeführt.

**TABELLE 4**

| Produkt | Beschichtung | Gewichtsverlust bei einer Temperatur von | | | | | |
|---|---|---|---|---|---|---|---|
| | | 300°C | 350°C | 400°C | 450°C | 500°C | 550°C |
| Beispiel 15 (erfindungsgemäß) | 8,7 % Poly-urethan | 0 | 4,6 | 7,2 | 9,8 | 13,7 | 17,7 |
| ® Exolit 456 [1] | 9,4 % Melamin-Formaldehyd-Harz | 1,1 | 8,9 | 17,0 | 18,4 | 20,6 | 24,9 |

[1] ® Exolit 456, Hoechst Aktiengesellschaft, Frankfurt/Main

Es handelt sich um ein mit Melamin-Formaldehyd-Harz beschichtetes ® Exolit 422

0178554

[1]) Exolit 456, Hoechst Aktiengesellschaft, Frankfurt/Main.
Es handelt sich um ein mit Melamin-Formaldehyd-Harz beschichtetes ® Exolit 422

Die Werte aus den Tabellen 1 - 3 lassen erkennen, daß mit Hilfe der erfindungsgemäßen Modifizierungsmittel der Gehalt an wasserlöslichen Anteilen erheblich gesenkt werden kann (bei 25°C um bis zu 98 %, bei 60°C um bis zu 99 %).

Die Werte aus Tabelle 4 zeigen, daß die Beschichtung mit Polyurethan zu einem modifizierten Ammoniumpolyphosphat mit deutlich höherer Thermostabilität führt.

**Patentansprüche**

1. Flammschutzmittel auf der Basis von freifließendem, pulverförmigem Ammoniumpolyphosphat der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 beträgt, dadurch gekennzeichnet, daß es aus

a) etwa 75 bis 99,5 Masse% Ammoniumpolyphosphat und

b) etwa 0,5 bis 25 Masse% eines Reaktionsproduktes aus einer Polyhydroxiverbindung und einem Polyisocyanat, wobei das gebildete Polyurethan die einzelnen Ammoniumpolyphosphatteilchen umhüllt, besteht.

2. Mittel nach Anspruch 1, dadurch gekennzeichnet, daß es eine mittlere Teilchengröße von etwa 0,01 bis 0,1 mm besitzt.

3. Mittel nach Anspruch 1 oder 2, dadurch gekennzeichnet, daß n eine ganze Zahl mit einem Durchschnittswert von 450 bis 800 ist.

4. Mittel nach Anspruch 1 - 3, dadurch gekennzeichnet, daß der Anteil des Polyurethans 2 bis etwa 15 Masse% beträgt.

5. Verfahren zur Herstellung eines Flammschutzmittels nach einem der vorhergehenden Ansprüche, dadurch gekennzeichnet, daß man eine Suspension, welche aus einem Verdünnungsmittel und aus freifließendem, pulverförmigem Ammoniumpolyphosphat der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 beträgt, sowie aus einem Polyisocyanat und aus einer Polyhydroxiverbindung besteht, während 0,5 bis 5 Stunden unter Rühren auf Temperaturen zwischen 30 bis 200°C hält und anschließend abkühlt, filtriert und das nunmehr mit einem Polyurethan mikroverkapselte Ammoniumpolyphosphat trocknet.

6. Verfahren nach Anspruch 6, dadurch gekennzeichnet, daß man die Suspension aus Verdünnungsmittel und Ammoniumpolyphosphat vorlegt und dieser Suspension Lösungen des Polyisocyanates und anschließend der Polyhydroxiverbindung in dem Verdünnungsmittel langsam zugibt.

7. Verfahren nach einem der Ansprüche 6 - 7, dadurch gekennzeichnet, daß in der allgemeinen Formel des Ammoniumpolyphosphates n eine ganze Zahl mit einem Durchschnittswert von 450 bis 800 ist.

8. Verfahren nach einem der Ansprüche 6 - 8, dadurch gekennzeichnet, daß als Verdünnungsmittel Lösemittel auf Basis aromatischer, aliphatischer oder cycloaliphatischer Kohlenwasserstoffe sowie aliphatischer, aromatischer und gemischtaliphatischer/aromatischer Ketone und Keton-Wasser-Gemische, vorzugsweise Aceton, eingesetzt werden.

9. Verfahren nach einem der Ansprüche 6 - 9, dadurch gekennzeichnet, daß als Polyisocyanat handelsübliche aromatische oder aliphatische Di- und Polyisocyanate, vorzugsweise technisches 4,4'-Diphenylmethandiisocyanat (MDI), eingesetzt werden.

10. Verfahren nach einem der Ansprüche 6 - 10, dadurch gekennzeichnet, daß als Polyhydroxiverbindung handelsübliche Polyether- und Polyesterpolyole, sowie aliphatische, aromatische und heterocyclische Polyhydroxiverbindungan, vorzugsweise Melamin/Formaldehyd-Harze, eingesetzt werden.

11. Verfahren nach einem der Ansprüche 6 - 11, dadurch gekennzeichnet, daß in der Suspension ein Verhältnis von Ammoniumpolyphosphat: Verdünnungsmittel: Polyisocyanat/Polyhydroxiverbindung wie 1 : 1,5 - 2,5 : 0,05 - 0,25, vorzugsweise wie 1 : 2: 0,1, eingehalten wird.

12. Verfahren nach einem der Ansprüche 6 - 12, dadurch gekennzeichnet, daß die Reaktionszeit 1 bis 2 Stunden bei Temperaturen zwischen 50 bis 100°C beträgt.

13. Verfahren nach einem der Ansprüche 6 - 13, dadurch gekennzeichnet, daß die Trocknung bei Temperaturen zwischen 80 bis 150°C in Inertgasatmosphäre, vorzugsweise im Stickstoffstrom, erfolgt.

14. Verfahren nach einem der Ansprüche 6 - 14, dadurch gekennzeichnet, daß die erreichte mittlere Teilchengröße des mikroverkapselten Ammoniumpolyphosphates als Flammschutzmittel zwischen 0,01 und 0,1 mm, vorzugsweise zwischen 0,03 und 0,06 mm, beträgt.

15. Verfahren nach einem der Ansprüche 6 - 15, dadurch gekennzeichnet, daß der Anteil des Polyurethans im Flammschutzmittel 2 bis etwa 15 Masse% beträgt.

16. Verwendung des Mittels nach Anspruch 1 - 5 und hergestellt nach dem Verfahren gemäß einem der Ansprüche 6-16 zur flammwidrigen Einstellung von Polyurethanen bzw. Polyurethanschäumen, wobei der Gehalt des Mittels im Polyurethanschaum etwa 5 bis 25 Masse%, bezogen auf die Menge der Polyolkomponente des Polyurethans, beträgt.

**Claims**

1. Flame-retardant agent based on free flowing pulverulent ammonium polyphosphate of the general formula

$$H_{(n-m)+2}(NH_4)_mP_nO_{3n+1}$$

in which $\underline{n}$ stands for a whole number having an average value of about 20 to 800 and the ratio m/n is about 1 consisting of
a) about 75 to 99.5 wgt % ammonium polyphosphate and
b) about 0.5 to 25 wgt % of a reaction product of a polyhydroxy compound and a polyisocyanate, the polyurethane formed encapsulating the individual ammonium polyphosphate particles.

2. Agent as claimed in claim 1 having a mean particle size of about 0.01 to 0.1 mm.

3. Agent as claimed in claim 1 or 2, wherein n stands for a whole number having an average value of 450 to 800.

4. Agent as claimed in any of claims 1 - 3, containing the polyurethane in a proportion of 2 to about 15 wgt %.

5. Process for making a flame-retardant agent as claimed in any of the preceding claims which comprises: maintaining a suspension consisting of a diluent and free flowing pulverulent ammonium polyphosphate of the general formula

$$H_{(n-m)+2}(NH_4)_mP_nO_{3n+1}$$

in which $\underline{n}$ stands for a whole number having an average value of about 20 to 800 and the ratio m/n is about 1, as well as of a polyisocyanate and a polyhydroxy compound over a period of 0.5 to 5 hours while stirring at a temperature between 30 and 200°C, cooling and filtering the suspension, and drying the ammonium polyphosphate now microencapsulated in the polyurethane.

6. Process as claimed in claim 5, wherein the suspension of diluent and ammonium polyphosphate is gradually admixed with a solution of the polyisocyanate and subsequently with a solution of the polyhydroxy compound in the diluent.

7. Process as claimed in claim 5 or 6, wherein, in the general formula of the ammonium polyphosphate, $\underline{n}$ stands for a whole number having an average value of 450 to 800.

8. Process as claimed in any of claims 5 - 7, wherein the diluents are solvents based on an aromatic, aliphatic or cycloaliphatic hydrocarbons or aliphatic, aromatic or mixed aliphatic/aromatic ketones, or ketone/water-mixtures, preferably acetone.

9. Process as claimed in any of claims 5 - 8, wherein the polyisocyanate is a commercially available aromatic or aliphatic di- or polyisocyanate, preferably commercial 4,4'-diphenylmethanediisocyanate. (MDI).

10. Process as claimed in any of claims 5 - 9, wherein the polyhydroxy compound is a commercially available polyether or polyester polyol or an aliphatic, aromatic or heterocyclic polyhydroxy compound, preferably a melamine/formaldehyde-resin.

11. Process as claimed in any of claims 5 - 10, wherein an ammonium polyphosphate: diluent: polyisocyanate/ polyhydroxy compound-ratio of 1 : 1.5 - 2.5 : 0.05- 0.25, preferably 1 : 2 : 0.1 is maintained in the suspension.

12. Process as claimed in any of claims 5 - 11, wherein the reaction period is 1 - 2 hours at temperatures between 50 and 100°C.

13. Process as claimed in any of claims 5 - 12, wherein the drying is effected at temperatures between 80 and 150°C under inert gas, preferably in a stream of nitrogen.

14. Process as claimed in any of claims 5 - 13, wherein the mean particle size reached for flame-retardant microencapsulated ammonium polyphosphate as a flame-retardant agent is between 0.01 and 0.1 mm, preferably 0.03 and 0.06 mm.

15. Process as claimed in any of claims 5 - 14, wherein the flame-retardant agent contains the polyurethane in a proportion of 2 to about 15 wgt %.

16. Use of the agent as claimed in any of claims 1 - 4 and prepared by a process as claimed in any of claims 5 - 15 for conferring flame-retardant properties upon polyurethanes or polyurethane foams, the polyurethane foam containing the agent in a proportion of about 5 - 25 wgt %, based on the quantity of the polyol component of the polyurethane.

**0 178 554**

**Revendications**

Agent ignifugeant à base de polyphosphate d'ammonium pulvérulent fluide de formule générale

$$H_{(n-m)+2}(NH_4)_m P_n O_{3n+1}$$

dans laquelle n représente un nombre entier d'une valeur moyenne d'environ 20 à 800 et le rapport m/n est d'environ 1, caractérisé en ce qu'il est constitué par
a) environ 75 à 99,5 % en poids de polyphosphate d'ammonium et
b) environ 0,5 à 25 %en poids d'un produit de réaction d'un composé polyhydroxylé et d'un polyisocyanate, le polyuréthanne encapsulant les particules individuelles de polyphosphate d'ammonium.

2. Agent selon la revendication 1, caractérisé en ce qu'il présente une granulométrie moyenne d'environ 0,01 à 0,1 mm.

3. Agent selon la revendication 1 ou 2, caractérisé en ce que n est un nombre entier d'une valeur moyenne de 450 à 800.

4. Agent selon l'une des revendications 1 à 3, caractérisé en ce que la fraction de polyuréthanne est de 2 a environ 15 % en poids.

5. Procédé de préparation d'un agent ignifugeant selon l'une des revendications précédentes, caractérisé en ce que l'on maintient une suspension constituée par un diluant et un polyphosphate d'ammonium pulvérulent fluide de formule générale

$$H_{n-m)+2}(NH_4)_m P_n O_{3n+1}$$

dans laquelle n représente un nombre entier d'une valeur moyenne d'environ 20 à 800 et le rapport m/n est d'environ 1, ainsi que par un polyisocyanate et un composé polyhydroxylé pendant 0,5 à 5 h sous agitation à des températures comprises entre 30 et 200°C, et ensuite on la refroidit, on filtre et on sèche le polyphosphate d'ammonium qui est alors micro-encapsulé dans un polyuréthanne.

6. Procédé selon la revendication 5, caractérisé en ce que l'on charge initialement la suspension de diluant et de polyphosphate d'ammonium et on ajoute lentement à cette suspension des solutions du polyisocyanate et ensuite du composé polyhydroxylé dans le diluant.

7. Procédé selon la revendication 5 ou 6, caractérisé en ce que, dans la formule générale du polyphosphate d'ammonium, n est un nombre entier d'une valeur moyenne de 450 à 800.

8. Procédé selon l'une des revendications 5 à 7, caractérisé en qu'on utilise comme diluant des solvants à base d'hydrocarbures aromatiques, aliphatiques ou cycloaliphatiques ainsi qu'à base de cétones aliphatiques, aromatiques et de cétones mixtes aliphatiques/aromatiques et des mélanges acétone/eau, de préférence l'acétone.

9. Procédé selon l'une des revendication 5 à 8, caractérisé en ce qu'on utilise comme polyisocyanate des di- et polyisocyanates aromatiques ou aliphatiques du commerce, de préférence le diiso-cyanato-4,4'-diphénylméthane (DIM) du commerce.

10. Procédé selon l'une des revendications 5 à 9, caractérisé en ce qu'on utilise comme composé polyhydroxylé, des polyéther- et polyester-polyols du commerce ainsi que des composés polyhydroxylés aliphatiques, aromariques et hétérocycliques, de préférence des résines mélamine/formaldéhyde.

11. Procédé selon l'une des revendications 5 à 10, caractérisé en qu'on maintient dans la suspension une proportion polyphosphate d'ammonium: diluant: polyisocyanate/composé polyhydroxylé de 1 : 1,5 - 2,5 : 0,05 - 0,25, de préférence 1 : 2 : 0,1.

12. Procédé selon l'une des revendications 5 à 11, caractérisé en ce que la durée de réaction est de 1 à 2 h à des températures comprises entre 50 et 100°C.

13. Procédé selon l'une des revendications 5 à 12, caractérisé en ce que l'on effectue le séchage à des températures comprises entre 80 et 150°C en atmosphère de gaz inerte, de préférence dans un courant d'azote.

14. Procédé selon l'une des revendications 5 à 13, caractérisé en ce que le polyphosphate d'ammonium micro-encapsulé comme agent ignifugeant présente une granulométrie moyenne comprise entre 0,01 et 0,1 mm, de préférence antre 0,03 et 0,06 mm.

15. Procédé selon l'une des revendications 5 à 14, caractérisé en ce que la fraction de polyuréthanne dans l'agent ignifugeant est de 2 à environ 15 % en poids.

16. Utilisation de l'agent selon l'une des revendications 1 à 4 et préparé par le procédé selon l'une des revendications 5 à 15 pour l'ignifugeage de polyuréthannes ou de mousses polyuréthannes, la teneur en agent dans la mousse de polyuréthanne étant d'environ 5 à 25 % en poids, rapportée à la quantité du composant polyol du polyuréthanne.